# EUROPÄISCHE PATENTANMELDUNG

(11) **EP 1 050 389 A2**
(43) Veröffentlichungstag der Anmeldung: **08.11.2000**
(21) Anmeldenummer: 00106023.5
(22) Anmeldetag: 28.03.2000
(51) Int. Cl.: B27D 5/00

(54) **Verfahren und Vorrichtung zur unterschiedlichen spanenden Bearbeitung eines Werkstücks mit nur einem Spanwerkzeug**

(30) Priorität: 07.04.1999 DE 19915673
(71) Anmelder: HOMAG MASCHINENBAU AG, D-72296 Schopfloch (DE)
(72) Erfinder: Kalmbach, Wilhelm, 72296 Schopfloch (DE)
(74) Vertreter: HOFFMANN - EITLE

(57) **Zusammenfassung**

Die Erfindung betrifft ein Verfahren und eine Vorrichtung zur unterschiedlichen spanenden Bearbeitung eines aus Holz, holzähnlichen Werkstoffen oder Kunststoffen bestehenden, meist plattenförmigen Werkstückes (2) mit nur einem Spanwerkzeug (6), das sich aus zwei Teilabschnitten (7, 8) zur spanenden Bearbeitung zusammensetzt. Bei dem erfindungsgemäßen Verfahren mittels eines ersten spanenden Teilabschnitts (8) des Spanwerkzeugs (6) wird ein erster Werkstückabschnitt (3, 9) bearbeitet, um damit an dem Werkstück (2) eine erste Spanbearbeitung in der durch die Formgebung des ersten Spanwerkzeug-Teilabschnitts (8) vorgegebenen Weise durchzuführen. Dabei wird das Spanwerkzeug mittels einer Tasteinrichtung (11) an einer ersten Werkstückfläche (3, 4, 15) geführt. Am Ende der ersten Werkstückfläche (3, 4, 15) wird die Tasteinrichtung auf eine sich daran anschließende Werkstückfläche (3) geführt, wobei während dieses Wechsels von einer Werkstückfläche (3, 4, 15) zur nächsten das Spanwerkzeug (6) gegenüber dem Werkstück (2) um einen vorgegebenen Längenbetrag derart versetzt wird, dass nun ein zweiter Spanwerkzeug-Teilabschnitt (7) zur andersartigen spanenden Bearbeitung mit einem anderen Werkstückabschnitt (10) in Eingriff gelangt, um diesen Werkstückabschnitt (10) in zur vorhergehenden Bearbeitung verschiedenen Weise zu bearbeiten.

## Beschreibung

### Technisches Gebiet

Die Erfindung betrifft ein Verfahren zur unterschiedlichen spanenden Bearbeitung eines aus Holz, holzähnlichen Werkstoffen oder Kunststoffen bestehenden, meist plattenförmigen Werkstücks mit nur einem Spanwerkzeug, das sich aus zwei Teilabschnitten zur spanenden Bearbeitung zusammensetzt. Die Erfindung betrifft ferner eine Vorrichtung zur Durchführung von zwei verschiedenen Bearbeitungsschritten an einem aus Holz, holzähnlichen Werkstoffen oder Kunststoffen bestehenden, meist plattenförmigen Werkstücks mit nur einem Spanwerkzeug.

Eine solche Verfahrensweise und eine derartige Vorrichtung sind sowohl in Bearbeitungszentren wie auch in Durchlaufmaschinen einsetzbar. Bearbeitungszentren im Sinne der vorliegenden Anmeldung sind dadurch gekennzeichnet, dass das zu bearbeitende Werkstück auf einem Tisch fest aufgespannt ist. Das jeweilige zur Bearbeitung dieses fest auf dem Tisch aufgespannten Werkstücks dienende Bearbeitungsaggregat wird dann in verschiedenen Achsen programmgesteuert am Werkstück entlang geführt werden. Die jeweiligen Bearbeitungsaggregate sind hierbei in einer in verschiedenen Achsen verfahrbaren Spindel einwechselbar. Eine Vorrichtung der eingangs genannten Art ist unter dem hier verwendenten Begriff "Bearbeitungsaggregat" zu subsumieren.

Die erforderliche Ausgestaltung der Schnittstelle, die die Einwechselbarkeit des Aggregats in die Spindel des Bearbeitungszentrums sicherstellt, kann jegliche Ausbildung nach dem Stand der Technik haben. So ist auch insbesondere eine Schnittstellenausbildung gemäß der DE 195 17 808 für eine erfindungsgemäße Vorrichtung verwendbar.

In den Durchlaufmaschinen werden die Werkstücke, wie ein in sich steifes Plattenmaterial, z.B. Vollholz- bzw. Spanplatten, sog. Tischlerplatten, Sperrholzplatten, Verbundplatten aus Holz, Kunststoff und Metall oder dergleichen, an einzelnen, Bearbeitungsstationen vorbeibewegt. Entlang der Bearbeitungsstrecke werden bei derartigen Durchlaufmaschinen meist eine Vielzahl von stark unterschiedlichen Bearbeitungsvorgängen an den Werkstücken ausgeführt. Die mit den Werkstücken in Eingriff bringbaren Mittel können daher Fräser, Bohrer, Schleifbänder oder andere Arten von spangebenden Werkzeugen sein. Sie können aber auch an den Werkstücken anzubringende, wie beispielsweise anzuleimende Kanten aus Holz oder Kunststoff, sein. Zusammengefaßt ist also eine Durchlaufmaschine dadurch gekennzeichnet, dass verschiedenste Bearbeitungen an einem an den jeweiligen Werkzeugen oder Bearbeitungsstationen vorbeigeführten Werkstück nacheinander durchgeführt werden. Zum Erfassen und Führen der Werkstücke ist meist eine als Band- oder Kettenförderer ausgestaltete Fördereinrichtung vorgesehen, die einlaufseitig mit einer Werkstückerfassung und deren Vorschub mit einem Meßsystem ausgestattet ist.

### Stand der Technik

Bei der Schmalkantenbearbeitung plattenförmiger Werkstücke müssen meist sowohl die Stirnseiten des Werkstücks wie auch die Werkstücklängskanten bearbeitet werden. Insbesondere ist es bei plattenförmigen Werkstücken auch üblich, eine Kante an der Werkstücklängsseite anzuleimen und dann umlaufend die angeleimte Kante zur Plattenoberfläche und zu den jeweiligen Stirnseiten bündig nachzuarbeiten.

Dieser Bearbeitungsvorgang erfolgte bisher bekanntermaßen, indem die hintere und vordere Stirnseite gekappt und die Längskante mit einer Fase oder einem Radiusprofil gefräst wird. Für das Kappen der Kante an der vorderen und hinteren Stirnseite der Werkstücke wird ein separates sogenanntes Kappaggregat eingesetzt. Ein derartiges Kappaggregat ist beispielsweise in der DE 34 476 49 oder DE 93 064 92 U1 beschrieben. Das Fräsen mit der gewünschten Profilform erfolgt mittels eines separaten Fräswerkzeugs.

Zusammenfassend ist festzuhalten, dass nach dem Stand der Technik, insbesondere bei angeleimter Kante zur vollständigen Bearbeitung des Werkstücks sowohl ein Kappaggregat notwendig ist, wie auch ein separates Fräsaggregat. Ferner mußten bisher auch verschiedene Fräswerkzeuge für unterschiedliche Fräsbearbeitungen eingesetzt werden. Zwar existieren bereits Stufenfräswerkzeuge, die mehrere verschiedene Fräswerkzeuge hintereinander gereiht aufweisen, wovon das Gewünschte dann mit dem Werkstück in Eingriff gebracht wird, jedoch kann dieses ein Kappaggregat nicht ersetzen. Darüber hinaus ist ein solches Stufenfräswerkzeug nur in einer sog. "Werkstücklücke" gegenüber dem Werkstück verschiebbar, um von einem Fräswerkzeug zum nächsten zu wechseln. Mit Werkstücklücke ist hier gemeint, dass das Stufenfräswerkzeug mit der gesamten Halterung, d.h. das gesamte Aggregat, vollständig von dem Werkstück abgehoben und dann wieder neu positioniert werden muß, um den gewünschten Fräsvorgang vorzunehmen.

### Darstellung der Erfindung

Der Erfindung liegt das technische Problem zugrunde, eine Verfahrensweise und eine Vorrichtung zu schaffen, die das Bearbeiten eines Werkstücks in unterschiedlicher Weise mit nur einem Spanwerkzeug ermöglichen.

Dieses technische Problem wird durch ein Verfahren mit den Merkmalen des Anspruchs 1 und eine Vorrichtung mit den Merkmalen des Anspruchs 10 gelöst.

Der Erfindung liegt der Gedanke zugrunde, ein einziges Spanwerkzeug in einzelne Teilabschnitte für eine unterschiedliche spanende Bearbeitung zu unterteilen, d.h. das Spanwerkzeug so auszugestalten, dass nebeneinander liegende Teilabschnitte des Spanwerkzeugs eine unterschiedliche Bearbeitung am Werkstück bewirken. So ist es beispielsweise möglich, einen Radiusfräser vorzusehen, der einen geraden Auslauf hat, mit dem neben der Radiusbearbeitung eine gerade Fräsbearbeitung des Werkstücks möglich ist. Um diese Teilabschnitte des Spanwerkzeugs nutzen zu können, ohne dass das gesamte Werkzeug vom Werkstück abgehoben werden muß - und damit neu justiert werden muss-, ist erfindungsgemäß vorgesehen, das Spanwerkzeug während des Wechselns von einer ersten Werkstückfläche zu einer zweiten Werkstückfläche gegenüber dem Werkstück um einen vorgegebenen Längenbetrag zu versetzen, so dass nun ein anderer Spanwerkzeug-Teilabschnitt zur andersartigen spanenden Bearbeitung mit einem anderen Werkstückabschnitt in Eingriff gelangt.

Es wird also erstmals erfindungsgemäß eine Werkzeugverschiebung in der sogenannten "Werkzeuglücke" vorgenommen. Mit "Werkzeuglücke" ist gemeint, dass durch die Tastung entlang zweier verschiedener, aneinandergrenzender Werkstückflächen das Werkzeug sich automatisch während eines gewissen Bereichs vom Werkzeug abhebt, und genau in dieser "Lücke" das Werkzeug dann um einen gewissen Längenbetrag versetzt wird, so dass an dem neuen Werkstückabschnitt eine zur vorhergehenden Bearbeitung unterschiedliche Spanbearbeitung erfolgen kann. Für die Erfindung ist also wesentlich, dass ein erster Werkstückabschnitt mit einem ersten spanenden Teilabschnitt des Spanwerkzeuges bearbeitet wird, wobei während dieses Bearbeitungsschrittes das Werkzeug durch eine Tasteinrichtung entlang einer ersten Werkstückfläche geführt wird. Dadurch, das das Werkzeug während des Wechselns von einer Werkstückfläche zur nächsten, die zur ersten Werkstückfläche geneigt ist, insbesondere um 90° versetzt ist, geführt oder bahngesteuert wird, wird in einem gewissen Übergangsbereich das Spanwerkzeug von dem Werkstück minimal abgehoben. Diese "Werkzeuglücke" wird genutzt, um das Spanwerkzeug gegenüber dem Werkstück zu verrücken, so dass dann das Spanwerkzeug mit dem zweiten spanenden Teilabschnitt eine andere Werkstückbearbeitung durchführt. Während dieser zweiten spanenden Bearbeitung wird das Werkzeug wieder mit der Tasteinrichtung am Werkstück tastend geführt - nun entlang der zweiten Werkstückfläche.

Bei der Schmalkantenbearbeitung eines plattenförmigen Werkstückes durch einen Fräser oder ein Schleifwerkzeug muss die gesamte Vorrichtung bzw. das Spanwerkzeug meistens wenigstens in einer Richtung geführt werden. Oftmals ist es aber auch zweckmäßig, das Spanwerkzeug in zwei, zueinander um 90° versetzte Richtungen zu führen. Dementsprechend ist es dann zweckmäßig, eine zweite Tasteinrichtung vorzusehen, die eine Führung entlang einer Werkstückfläche erbringt, welche zur Werkstückfläche, an der die erste Tasteinrichtung entlangfährt, um beispielsweise 90° versetzt ist. Insbesondere bei der Bearbeitung der Schmalkanten einer Platte sind diese Flächen die Plattenoberfläche, die Plattenstirnseiten und die Plattenvorderkante.

Das erfindungsgemäße Verfahren ist insbesondere bei der Bearbeitung einer an einem plattenförmigen Werkstück angeleimten Kante zweckmäßig. Die Kanten werden an der Werkstückschmallängsseite angeleimt, stehen aber dabei sowohl über die jeweiligen Stirnseiten - vordere und hintere Stirnseite - wie auch über die Plattenoberseite hinaus. Um nun kein Kappaggregat einsetzen zu müssen, erfolgt der erste Bearbeitungsschritt derart, dass die überstehende Kante bündig mit der Werkstückstirnseite gekappt wird. Dann wird die Werkstücklängsoberkante mit einem Radius oder einer Fase versehen und schließlich wird auf der gegenüberliegenden Stirnseite die angeleimte Kante bündig gekappt. Hierbei wird das Spanwerkzeug von der ersten Tasteinrichtung ständig erst an der vorderen Stirnseite, dann an der Plattenoberseite und an der hinteren Stirnseite mittels der ersten Tasteinrichtung geführt. Bei dem jeweiligen Übergang von der Stirnseite zur Plattenoberseite bzw. von der Plattenoberseite zur Stirnseite erfolgt der Versatz des Spanwerkzeuges in Richtung der Senkrechten auf die Werkstückschmallängsseite. Der Versatz beträgt ungefähr 1 bis 10 mm, je nach dem gewünschten Radius und dem sich daran anschließenden weiteren Spanwerkzeug-Teilabschnitt. Insbesondere beträgt der Versatz 2-4 mm.

Idealerweise ist als Werkzeug ein Fräswerkzeug vorgesehen, das sich aus einzelnen Schneiden zusammensetzt, die einen Radius wie auch einen Geradfräsabschnitt aufweisen. Damit lassen sich dann die überstehenden Kanten bündig kappen und die Werkstücklängsoberkante mit einem Radius fräsen oder mit einer Fase versehen.

Optimalerweise wird das erfindungsgemäße Verfahren in einer Durchlaufmaschine durchgeführt, bei der die zu bearbeitenden Werkstücke mit konstanter Geschwindigkeit an verschiedenen Bearbeitungsstationen vorbeibewegt werden. In einer dieser Bearbeitungsstationen wird das Spanwerkzeug in der zuvor genannten Verfahrensweise an dem Werkstück eingesetzt. Hierbei bewegt sich das Spanwerkzeug teilweise zusammen mit dem Werkstück in dessen Bewegungsrichtung mit.

Eine erfindungsgemäße Vorrichtung umfasst eine Werkzeughalterung zur lösbaren Aufnahme eines Spanwerkzeuges, das sich aus verschiedenen, unterschiedlichen Werkstückbearbeitungen bewirkenden Teilabschnitten zusammensetzt. Die Anzahl der Spanwerkzeug-Teilabschnitte entspricht der Anzahl an gewünschten unterschiedlichen Bearbeitungsschritten. Eine erfindungsgemäße Vorrichtung umfasst ferner eine Tasteinrichtung, mit der während der Werkstückbearbeitung der gewünschte Spanwerkzeug-Teilabschnitt definiert zum Werkstück gehalten wird. Darüber hinaus ist eine Verschiebeeinrichtung vorhanden, mit der entweder die Werkzeughalterung und das darin eingesetzte Spanwerkzeug oder die gesamte Vorrichtung während des Übergangs von einer Werkstückführungsfläche zur nächsten, d.h. während der Bewegung von einer Werkstück-Bearbeitungsposition in die nächste so verschiebbar ist, dass die Bearbeitung des Werkstücks mit dem gewünschten Spanbearbeitungs-Teilabschnitt des Spanwerkzeugs an unterschiedlichen Werkstückabschnitten erfolgen kann.

Vorteilhafterweise sind zwei oder auch mehr Tasteinrichtungen vorhanden, mit denen das Spanwerkzeug jeweils definiert zum überarbeitenden Werkstückabschnitt führbar ist. Die Anzahl an Tasteinrichtung hängt insbesondere auch von der Art des mit dem Werkstück in Eingriff stehenden Spanwerkzeug-Teilabschnitts ab. Als Tasteinrichtungen sind verschiedenste bekannte Einrichtungen zweckmäßig, insbesondere Tastrollen, Tastgleitschuhe oder Tastscheiben, etc.

Vorteilhafterweise ist eine erste Tasteinrichtung als Tastrolle ausgebildet und eine zweite Tasteinrichtung als Tastgleitfläche. Die Tastgleitfläche bewirkt eine Führung des Spanwerkzeuges in einer Richtung, die senkrecht zu der Führungsrichtung der zweiten Tasteinrichtung verläuft. Insbesondere bei der Bearbeitung einer Werkstückschmalseite ist eine derartige Ausgestaltung der Tasteinrichtungen zweckmäßig, wobei die Tastgleitfläche entlang der Werkstückschmallängsseite gleitet.

Der Versatz des Werkzeuges oder der gesamten Vorrichtung in der geforderten Weise kann auf unterschiedliche Weise erfolgen. So ist beispielsweise eine pneumatische oder hydraulische Verstellung um den definierten Längenbetrag möglich. Insbesondere ist es auch vorteilhaft, wenn die Tastgleitfläche sich aus verschieden geneigten oder gekrümmten Abschnitten zusammensetzt und zusammen mit einer Rückstelleinrichtung, die eine Rückstellkraft in Richtung der Werkstücklängsschmalkante bewirkt, in Form einer Feder oder dergleichen, vorhanden ist. Damit wird in dem Übergangsbereich von einer Werkstückfläche zur nächsten - also in der "Werkzeuglücke" - das Spanwerkzeug automatisch um den definierten Längenbetrag versetzt.

Ferner ist es bei der Bearbeitung von Stirnseiten und Werkstücklängskanten bzw. -schmallängsseiten zweckmäßig, eine Hebe- und Absenkeinrichtung vorzusehen, mit der die gesamte Vorrichtung oder zumindest das Spanwerkzeug gegenüber einem hieran vorbeilaufenden Werkstückabschnitt anhebbar und absenkbar ist.

Wenn die zweite Tasteinrichtung nicht bereits als Verschiebeeinrichtung das automatische Versetzen des Werkzeugs bewirkt, so ist es zweckmäßig, dass die Anhebe- und Absenkeinrichtung und die Verschiebeeinrichtung über eine Steuereinrichtung so miteinander synchronisiert sind, dass bei Wechsel des Bearbeitungsabschnitts mittels des Anhebevorgangs und/oder Absenkvorgangs das Spanwerkzeug in der "Werkzeuglücke" um den vorbestimmten Längenbetrag gegenüber dem Werkstück versetzt wird.

Wie eingangs erwähnt, ist eine derartige erfindungsgemäße Vorrichtung sowohl in Durchlaufmaschinen wie auch in Bearbeitungszentren vorteilhaft einsetzbar. Insbesondere bei der Bearbeitung angeleimter Kanten wird zum einen ein Kappaggregat eingespart, zum anderen muss zur unterschiedlichen Spanbearbeitung verschiedener Werkzeugabschnitte kein aktiver Werkzeugwechsel vorgenommen werden, der einen Stillstand der Anlage erforderlich macht oder das Wegführen des Spanwerkzeuges vom Werkstück.

Bei einer speziellen Ausführungsform sind eine oder mehrere Stützrollen an der erfindungsgemäßen Vorrichtung angeordnet, die die Tastung in der Werkzeuglücke übernehmen. D.h., während des Übergangs von einer Werkzeugfläche zur nächsten, wird die erste Tasteinrichtung kurzzeitig vom Werkstück abgehoben. Solange die erste Tasteinrichtung vom Werkstück abgehoben ist, kann dann der vorbestimmte Längenversatz durchgeführt werden, so dass nach vollendendem Werkstückflächenwechsel die erste Tasteinrichtung - und damit das Spanwerkzeug, aber mit dem zweiten Spanwerkzeug-Teilabschnitt - wieder mit dem Werkstück in Eingriff gelangt. Diese Ausführungsform ist insbesondere bei einer als Tastrolle ausgebildeten Tasteinrichtung vorteilhaft.

### Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben und erläutert. Es zeigen:
- Fig. 1a - 1h: eine Bearbeitungssequenz zur Bearbeitung eines plattenförmigen Werkstückes mit an einer Werkstückschmallängsseite angeleimter Kante, wobei in jeder Sequenz eine Draufsicht auf die Werkstückoberseite (obere Darstellung) und eine Vorderansicht auf die Werkstückschmallängsseite (untere Darstellung) gezeigt ist,
- Fig. 2: eine Querschnittsansicht durch eine erfindungsgemäße Vorrichtung, die auf einem mit einer angeleimten Kante versehenen plattenförmigen Werkstück geführt ist,
- Fig. 3: eine Vorderansicht einer erfindungsgemäßen Vorrichtung mit Tastrolle und zwei Stützrollen und
- Fig. 4: eine Teilschnittansicht der erfindungsgemäßen Vorrichtung, aus der die Kontur einer zweiten Tasteinrichtung - hier ein Tastgleitschuh - ersichtlich ist.

### Beschreibung einer bevorzugten Ausführungsform der Erfindung

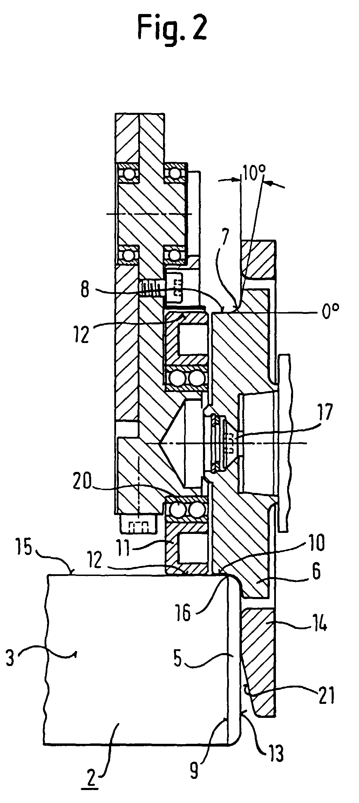

Die erfindungsgemäße Vorrichtung 1 bzw. das Aggregat weist, wie es insbesondere in Fig. 2 gut ersichtlich ist, eine Tastrolle 11 auf, die über Lager 20 drehbar gelagert ist. Die Tastrolle 11 besitzt umfangsseitig eine Tastrollenumfangsfläche 12, die zur Anlage an das Werkstück 2 dient. Vor der Tastrolle 11 ist das Spanwerkzeug 6 angeordnet. Das Spanwerkzeug 6 ist in einer Werkzeughalterung 17 drehbar gelagert und umfasst mehrere, auf einem Kreis gleichmäßig beabstandete Schneiden, die jeweils einen ersten Teilabschnitt 8 und einen zweiten Teilabschnitt 7 umfassen. Der erste Spanwerkzeug-Teilabschnitt 8 ist geradlinig ausgebildet, der zweite Spanwerkzeug-Teilabschnitt 7 weist einen Radius auf (zum Radienfräsen) und schließt sich an den ersten Teilabschnitt 8 an. Wie insbesondere aus der Fig. 2 ersichtlich ist, weist der erste Teilabschnitt 8 einen Auslaufwinkel von 0° auf. Vor dem Spanwerkzeug 6 ist eine zweite feststehende Tasteinrichtung 14 angeordnet, die eine unterschiedliche Krümmungen aufweisende Vorderfläche 21 besitzt. Sie dient als Gleitfläche an der Kantensicht- oder Vorderseite 13 der angeleimten Kante 5.

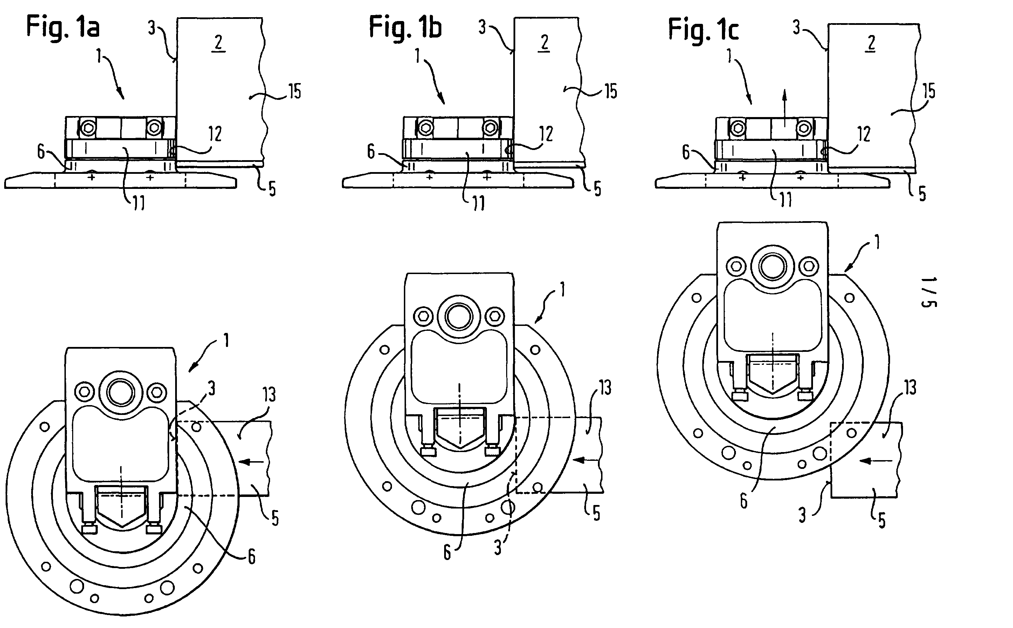

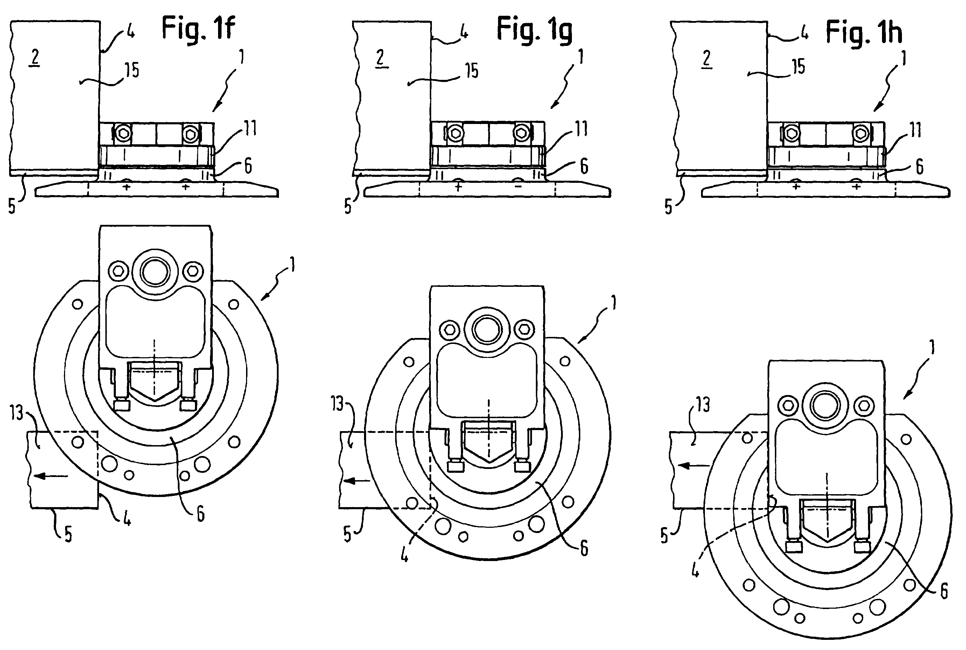

Beispielhaft wird nun anhand der Bearbeitungssequenz gemäß den Fig. 1a - 1h die erfindungsgemäße Verfahrensweise erläutert. Es sei hier nochmals herausgestellt, dass in den einzelnen Figuren 1a - 1h die obere Darstellung jeweils eine Draufsicht auf ein zu bearbeitendes plattenförmiges Werkstück 2 und auf eine erfindungsgemäße Vorrichtung in schematisierter Form zeigen. Die untere Darstellung zeigt eine Vorderansicht auf das plattenförmige Werkstück und der entsprechend dem gewünschten Bearbeitungsschritt plazierten erfindungsgemäßen Vorrichtung.

Wie insbesondere aus den Draufsichten der Fig. 1a - 1h erkennbar ist, wird ein plattenförmiges Werkstück 2 mit angeleimter Kante 5 an der Werkstückschmallängsseite bearbeitet. Das plattenförmige Werkstück weist eine Plattenoberseite 15 auf und besitzt zwei Stirnseiten 3, 4. Die angeleimte Kante 5 steht sowohl über die Stirnseite 3 wie auch über die Stirnseite 4 hinaus. Zusätzlich ist sie nach dem Anleimen in einer hier nicht dargestellten Durchlaufmaschine auch nicht mit der Plattenoberseite 15 bündig. Dementsprechend muss die Kante 5 sowohl an der Stirnseite 3 wie auch an der Stirnseite 4 und der Plattenoberseite 15 bündig gefräst werden.

In den Fig. 1a, 1b ist das Kappen der Kante 5 an der Stirnseite 3 des Werkstückes 2 gezeigt. So wird das gesamte Aggregat gemäß der unteren Darstellung der Figuren 1a, 1b von der unteren Kante bis zur oberen Kante des Werkstückes 2 mittels der ersten Tasteinrichtung 11 entlang der Stirnseite 3 geführt. Dabei ist die Gleitfläche 21 der zweiten Tasteinrichtung 14 von der Kante 5 um einen gewissen Längenbetrag beabstandet, so dass während dieser Sequenz nur der erste Teilabschnitt 8 des Spanwerkzeuges 6 mit dem Werkstück in Eingriff kommt. Dadurch kann also die Kante 5 mit der Stirnseite 3 des Werkstückes 2 bündiggefräst werden.

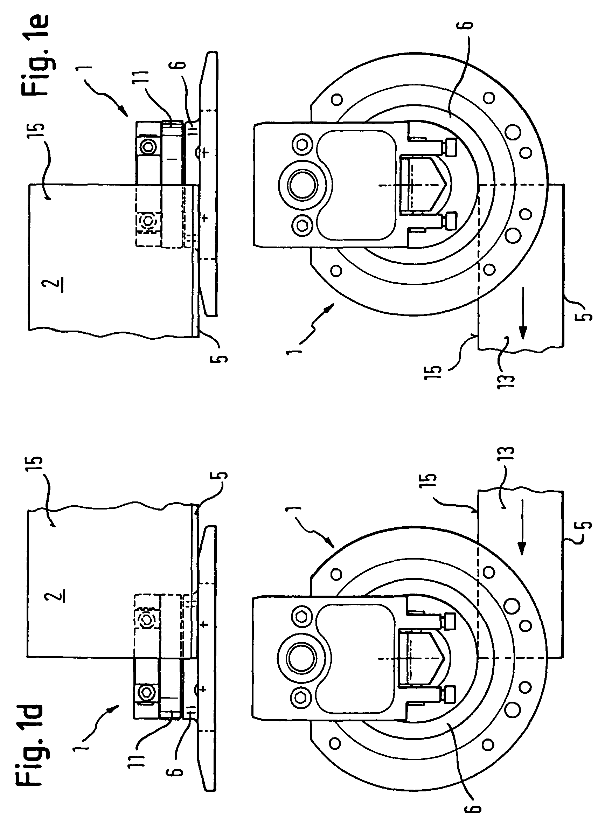

Sobald das Aggregat 1 die Oberkante des Werkstückes 2 erreicht, d.h. die Stirnseite der Kante 5 ist mit dem ersten Spanwerkzeug-Teilabschnitt 8 des Spanwerkzeuges 6 vollständig bündig gefräst, wird nun beim Übergang von der Stirnseite 3 zur Plattenoberfläche 15 des Werkstückes 2 die gesamte Vorrichtung 1 derart zum Werkstück versetzt, dass die zweite Tasteinrichtung 14 mit der Vorderseite 13 der Kante 5 in Anlage gelangt. Dann wird gemäß den Fig. 1d und 1e unter Führung mittels der ersten Tasteinrichtung 11 entlang der Plattenoberfläche 15 und unter Führung der zweiten Tasteinrichtung 14 entlang der Vorderseite 13 der Kante 5 mit dem zweiten Spanwerkzeug-Teilabschnitt 7 die Werkstücklängsoberkante 16 mit einem Radius versehen und dabei gleichzeitig mit der Oberseite 15 bündig gefräst.

Gemäß den Fig. 1f - 1h wird nun in umgekehrter Weise zu den Fig. 1a - 1c wieder das Werkzeug um einen gewissen Längenbetrag nach vorn gerückt, so dass der erste Teilabschnitt 8 des Werkzeugs 6 mit der überstehenden Kante 5 in Eingriff gelangt und damit die Kante 5 mit der Stirnseite 4 bündiggefräst werden kann.

Mit der Vorgehensweise gemäß der Sequenzen 1a - 1h ist es somit möglich, eine angeleimte Kante an den Stirnseiten 3, 4 bündig zu fräsen und ohne das Werkzeug wechseln zu müssen, die Werkstücklängsoberkante mit einem Radius oder auch einer Fase zu versehen.

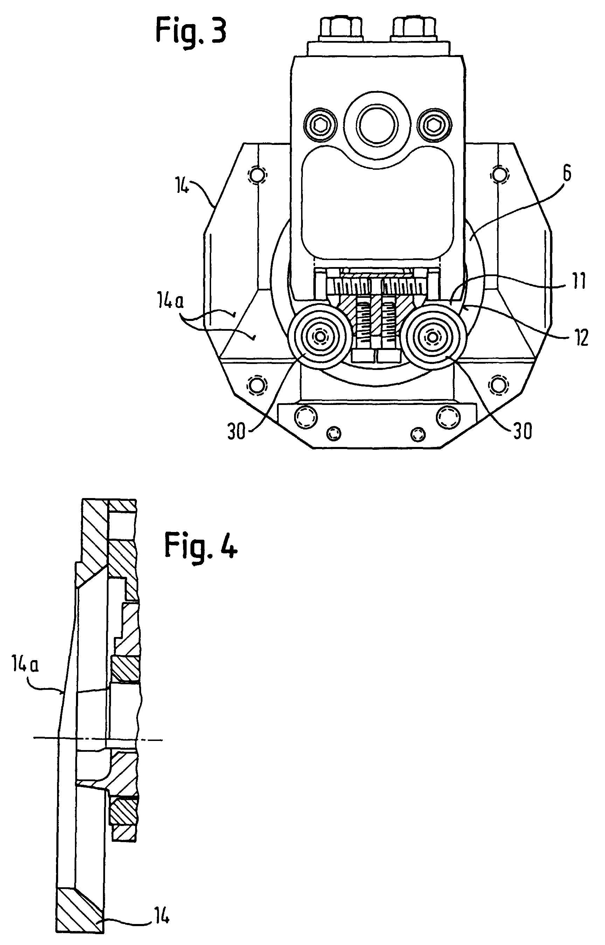

Die Vorderansicht der Fig. 3 zeigt deutlich die Anordnung zweier Stützrollen 30 vor der Tastrolle 11. Die Stützrollen 30 sind drehbar gelagert. Deren Drehachsen sind zur Drehachse der Tastrolle 11 parallel angeordnet. Bei einem Wechsel von der Werkstückstirnseite 3 zur Werkstückoberseite 15 bzw. von der Werkstückoberseite 15 zur Werkstückstirnseite 4 gelangt zeitweise die rechte bzw. linke Stützrolle 30 mit den jeweiligen Werstückflächen 3, 15 bzw. 15, 4 in Anlage. Währenddessen ist das Spanwerkzeug 6 vom Werkstück abgehoben und kann um den erforderlichen Längenbetrag versetzt werden, so dass dann ein anderer Spanwerkzeug-Teilabschnitt mit dem Werkstück in Eingriff gelangt. Bei dieser Ausführungsform ist die gesamte Vorrichtung 1 federnd gelagert und wird durch das Werkstück 2 angehoben bzw. abgesenkt.

Der Längenversatz wird hier durch die zweite Tasteinrichtung 14 gesteuert. Dieser Tastgleitschuh 14 weist eine verschieden geneigte Flächen 14a auf, die je nach Höhenlage der Vorrichtung 1 gegenüber dem Werkstück 2 über Anlage an die Kante 5 den Abstand des Spanwerkzeugs 6 gegenüber dem Werkstück 2 festlegen. D.h., der Abstand der verschiedenen Flächen 14a des Tastgleitschuhs 14 zur Sichtseite der angeleimten Kante 5 ist unterschiedlich. So ist in der Position gemäß den Fig. 1a und 1b der Abstand größer als in der Position gemäß der Fig. 1c -1e.

## Patentansprüche

1. Verfahren zur unterschiedlichen spanenden Bearbeitung eines aus Holz, holzähnlichen Werkstoffen oder Kunststoffen bestehenden, meist plattenförmigen Werkstücks (2) mit nur einem Spanwerkzeug (6), das sich aus zwei Teilabschnitten (7, 8) zur spanenden Bearbeitung zusammensetzt, bei dem
a) mittels eines ersten spanenden Teilabschnitts (8) des Spanwerkzeugs (6) ein erster Werkstückabschnitt (3, 9) bearbeitet wird, um damit an dem Werkstück (2) eine erste spanende Bearbeitung in der durch die Formgebung des ersten Spanwerkzeug-Teilabschnitts (8) vorgegebenen Weise durchzuführen, wobei das Spanwerkzeug mittels einer Tasteinrichtung (11) an einer ersten Werkstückfläche (3, 4, 15) geführt wird,
b) am Ende der ersten Werkstückfläche (3, 4, 15) die Tasteinrichtung (11) auf eine sich daran anschließende Werkstückfläche (3) geführt wird, wobei während dieses Wechselns von einer Werkstückfläche (3, 4 15) zur nächsten das Spanwerkzeug (6) gegenüber dem Werkstück (2) um einen vorgegebenen Längenbetrag derart versetzt wird, dass nun ein zweiter Spanwerkzeug-Teilabschnitt (7) zur andersartigen spanenden Bearbeitung mit einem anderen Werkstückabschnitt (10) in Eingriff gelangt, um diesen Werkstückabschnitt (10) in zur vorhergehenden Bearbeitung verschiedenen Weise zu bearbeiten.

2. Verfahren nach Anspruch 1, **dadurch gekennzeichnet, dass** das Spanwerkzeug (6) während zumindest einer der Bearbeitungen mittels einem der spanenden Werkzeug-Teilabschnitte (7, 8) durch eine zweite Tasteinrichtung (14) entlang einer Fläche (13) des Werkstücks (2) geführt wird.

3. Verfahren nach Anspruch 2, **dadurch gekennzeichnet, dass** das Spanwerkzeug (6) während der Werkstückbearbeitung mit dem ersten spanenden Teilabschnitt (8) des Werkzeugs (6) mittels der ersten Tasteinrichtung (11) entlang einer Fläche (3, 4, 10) des Werkstücks (2) geführt wird und während der Werkstückbearbeitung mit dem weiteren spanenden Teilabschnitt (7) des Werkzeugs (6) entlang einer anderen Werkstückfläche (13) zusätzlich durch die zweite Tasteinrichtung (14) geführt wird.

4. Verfahren nach Anspruch 2 oder 3, **dadurch gekennzeichnet, dass**
- das eine Stirnseitenkante (9) des Werkstücks (2) mittels des ersten Spanwerkzeug-Teilabschnitts (8) bearbeitet wird und währenddessen das Spanwerkzeug (6) über die erste Tasteinrichtung (11) an der zugehörigen Werkstückstirnseite (3, 4) geführt wird,
- am Ende dieser Werkstückbearbeitung das Spanwerkzeug (6) auf die Werkstückoberseite (15) angehoben wird und dann mittels der ersten Tasteinrichtung (11) an der Werkstückoberseite (15) geführt wird,
- während dieses Anhebevorgangs in der sogenannten Werkzeuglücke das Spanwerkzeug (6) um den vorbestimmten Längenbetrag gegenüber der angrenzenden Werkstücklängskante (16) versetzt wird, so dass nun der andere Spanwerkzeug-Teilabschnitt (7) mit der Werkzeuglängskante (16) in Eingriff gelangt, und
- dann die Werkstücklängskante (16) durch den anderen Spanwerkzeug-Teilabschnitt (7) bearbeitet wird.

5. Verfahren nach Anspruch 4, **dadurch gekennzeichnet, dass** das Spanwerkzeug (6) während der Bearbeitung der Werkstücklängskante (16) sowohl über die erste Tasteinrichtung (11) an der Werkstückoberseite (15) entlang geführt wird wie auch durch eine zweite Tasteinrichtung (14) entlang der angrenzenden Werkstücklängsschmalseite (13) geführt wird.

6. Verfahren nach einem der vorhergehenden Ansprüche, **dadurch gekennzeichnet, dass** mit dem Verfahren ein plattenförmiges Werkstück (2) mit angeleimter Kante (5) bearbeitet wird, indem
- während des ersten Bearbeitungsschritts die über die eine Werkstückstirnseite (3) überstehende Kante (5) bündig mit der Werkstückstirnseite (3) gefräst wird,
- dann die Werkstücklängsoberkante (16) mit einem Radius oder einer Fase versehen wird und
- schließlich die angeleimte Kante (5) in einem dem ersten Bearbeitungsschritt entsprechenden Bearbeitungsschritt mit der anderen Werkstückstirnseite (4) bündig gefräst wird, wobei bei dem Übergang vom zweiten zum dritten Bearbeitungsschritt das Spanwerkzeug (6) wieder in der Werkzeuglücke um den vorbestimmten Längenbetrag zurückversetzt wird, so dass wieder der erste Spanwerkzeug-Teilabschnitt (8) zum Einsatz kommt.

7. Verfahren nach einem der Ansprüche 1-6, **dadurch gekennzeichnet, dass** das Verfahren mit einem Fräswerkzeug (6) durchgeführt wird, dessen erster Fräser-Teilabschnitt (8) zum Geradfräsen ausgebildet ist und dessen weiterer Fräser-Teilabschnitt (7) zum Radiusfräsen an einer Werkstückaußenkante (16) ausgebildet ist.

8. Verfahren nach einem der Ansprüche 1-6, **dadurch gekennzeichnet, dass** das Verfahren mit einem Fräswerkzeug (6) durchgeführt wird, dessen erster Fräser-Teilabschnitt (8) zum Geradfräsen ausgebildet ist und dessen weiterer Fräser-Teilabschnitt (7) zum Fasenfräsen an einer Werkstückaußenkante (16) ausgebildet ist.

9. Verfahren nach einem der vorhergehenden Ansprüche, **dadurch gekennzeichnet, dass**
- das zu bearbeitende Werkstück (2) mit konstanter Geschwindigkeit an verschiedenen Bearbeitungsstationen in einer Durchlaufmaschine vorbeibewegt wird und
- in einer dieser Bearbeitungsstationen das Spanwerkzeug (6) in der nach einem der vorhergehenden Ansprüche definierten Verfahrensweise an dem Werkstück (2) eingesetzt wird, wobei das Spanwerkzeug (6) je nach dem gerade durchzuführenden Bearbeitungsschritt zumindest in Bewegungsrichtung des Werkstücks (2) mit bewegt wird.

10. Vorrichtung (1) zur Durchführung von zwei verschiedenen Bearbeitungsschritten an einem aus Holz, holzähnlichen Werkstoffen oder Kunststoffen bestehenden, meist plattenförmigen Werkstück (2) mit nur einem Spanwerkzeug (6), mit
- einer Werkzeughalterung (17) zur lösbaren Aufnahme des Spanwerkzeugs (6), das sich aus zwei verschiedenen, unterschiedliche Werkstückbearbeitungen bewirkenden Teilabschnitten (7, 8) zusammensetzt,
- wenigstens einer Tasteinrichtung (11, 14), mit der während der Werkstückbearbeitung der gewünschte Spanwerkzeug-Teilabschnitt (7, 8) definiert zum Werkstück (2) gehalten wird, und
- einer Verschiebeeinrichtung, mit der entweder die Werkzeughalterung (17) und das darin eingesetzte Spanwerkzeug (6) oder die ganze Vorrichtung (1) während der Werkstückbearbeitung von einer Werkstück-Bearbeitungsposition in eine weitere Werkstück-Bearbeitungsposition so verschiebbar ist, dass die Bearbeitung des Werkstücks (2) mit dem gewünschten Spanbearbeitungs-Teilabschnitt des Spanwerkzeugs (6) an unterschiedlichen Werkstückabschnitten erfolgen kann.

11. Vorrichtung nach Anspruch 10, **dadurch gekennzeichnet, dass** die Tasteinrichtung (11) so ausgestaltet ist, dass die Vorrichtung (1) zumindest während einem der Bearbeitungsschritte entlang einer Fläche (3, 4, 15) des Werkstücke (2) definiert zu führen ist.

12. Vorrichtung nach Anspruch 11, **dadurch gekennzeichnet, dass** zwei oder mehr Tasteinrichtungen (11, 14) vorhanden sind, mit denen das Spanwerkzeug (6) je nach dem im Eingriff mit dem Werkstück (2) stehenden Spanwerkzeug-Teilabschnitt (7, 8) jeweils definiert zum zu bearbeitenden Werkstückabschnitt führbar ist.

13. Vorrichtung nach Anspruch 12, **dadurch gekennzeichnet, dass** die Tasteinrichtungen (11, 14) je nach Einsatzzweck als Tastrolle, Tastgleitschuh, Tastscheibe ausgebildet sind.

14. Vorrichtung nach Anspruch 10, **dadurch gekennzeichnet, dass** eine erste Tasteinrichtung als Tastrolle (11) ausgebildet ist und eine zweite Tasteinrichtung als Tastgleitfläche (14) ausgebildet ist, die eine Führung des Spanwerkzeugs (6) in einer Richtung bewirkt, die senkrecht zu der Führungsrichtung der zweiten Tasteinrichtung (14) verläuft.

15. Vorrichtung nach Anspruch 10 oder 14, **dadurch gekennzeichnet, dass** eine Tasteinrichtung als Tastgleitfläche (14) ausgebildet ist, die sich aus verschieden geneigten oder gekrümmten Abschnitten zusammensetzt und als Verschiebeeinrichtung dient.

16. Vorrichtung nach Anspruch 14 oder 15, **dadurch gekennzeichnet, dass** zusätzlich zumindest eine Stützrolle (30) vorhanden ist, die die Vorrichtung (1) während eines Werkstückflächenwechsels abstützt.

17. Vorrichtung nach einem der Ansprüche 10-12, **dadurch gekennzeichnet, dass** eine Anhebe-und Absenkeinrichtung vorhanden ist, mit der die gesamte Vorrichtung (1) oder zumindest das Spanwerkzeug (6) gegenüber einem hieran vorbeilaufenden Werkstückabschnitt anheb- und absenkbar ist.

18. Vorrichtung nach Anspruch 16, **dadurch gekennzeichnet, dass** die Anhebe- und Absenkeinrichtung und die Verschiebeeinrichtung über eine Steuereinrichtung so miteinander synchronisiert sind, dass bei Wechsel des Werkzeugbearbeitungsabschnitts mittels des Anhebevorgangs und/oder Absenkvorgangs das Spanwerkzeug (6) in der sogenannten Werkzeuglücke um den vorbestimmten Längenbetrag gegenüber dem Werkstück (2) versetzt wird, so dass nun der andere Spanwerkzeug-Teilabschnitt (7) mit dem weiteren Werkstückbearbeitungsabschnitt (16) in Eingriff gelangt.

19. Vorrichtung nach einem der vorhergehenden Ansprüche, **dadurch gekennzeichnet, dass** das Spanwerkzeug ein Fräswerkzeug (6) mit zwei Fräs-Teilabschnitten (7, 8) ist, wovon der eine Fräs-Teilabschnitt (7) zum Fasen- oder Radiusfräsen ausgestaltet ist, der andere (8) zum Geradfräsen.

20. Durchlaufmaschine zur unterschiedlichen Bearbeitung von mit konstanter Geschwindigkeit durchlaufenden, aus Holz, holzähnlichen Werkstoffen oder Kunststoffen bestehenden, meist plattenförmigen Werkstücken (2), mit mehreren Bearbeitungsstationen, wovon eine Bearbeitungsstation eine Vorrichtung nach einem der Ansprüche 10-19 umfasst.

21. Bearbeitungszentrum zur Bearbeitung von aus Holz, holzähnlichen Werkstoffen oder Kunststoffen bestehenden, meist plattenförmigen Werkstücken (2) mittels verschiedener Bearbeitungsaggregate (1), die in eine programmgesteuert um die Werkstücke herum verfahrbare Spindel einwechselbar sind, wobei ein Bearbeitungsaggregat eine Vorrichtung nach einem der Ansprüche 10-19 umfasst.
